# EUROPÄISCHE PATENTSCHRIFT

(11) **EP 0 586 396 B1**
(45) Veröffentlichungstag und Bekanntmachung des Hinweises auf die Patenterteilung: **29.01.1997**
(21) Anmeldenummer: 92908029.9
(22) Anmeldetag: 07.04.1992
(51) Int. Cl.: F16L 33/08

(54) **SCHLAUCHSCHELLE**
HOSE CLIP
COLLIER DE SERRAGE DE TUYAUX

(30) Priorität: 24.05.1991 DE 4116918
(43) Veröffentlichungstag der Anmeldung: 16.03.1994
(73) Patentinhaber: Seeger-Orbis GmbH & Co. oHG, 61462 Königstein (DE)
(72) Erfinder: BAUMANN, Artur, D-7209 Aixheim (DE); GEIGER, Manfred, D-8551 Röttenbach (DE)
(74) Vertreter: Wolf, Eckhard, Dr.-Ing.
(86) Internationale Anmeldenummer: EP9200788
(87) Internationale Veröffentlichungsnummer: WO9220950

(56) Entgegenhaltungen:
- FR-A- 1 215 738
- GB-A- 566 271
- GB-A- 567 031
- GB-A- 586 235
- GB-A- 706 207
- GB-A- 1 313 649
- US-A- 2 346 906
- US-A- 2 477 045
- K. MILLS 'Metals Handbook. Vol.6, Edition 9. Welding, Brazing and Soldering' 1983, METALS PARK, ASM, US

## Beschreibung

Die Erfindung betrifft eine Schlauchschelle mit einem eine Lagerstelle für eine Bandspannschraube und einen Sattel aufweisenden metallischen Gehäuse und einem im wesentlichen kreisförmig gebogenen flachen Metallband, das in der Nähe seines einen Endes starr mit dem Sattel verbunden ist und mit seinem anderen, freien Ende durch eine sattelnahe Tunnelöffnung des Gehäuses hindurchführbar ist und das eine rasterartige Folge von Perforationen oder Prägungen mit schräg verlaufenden Querstegen für den Eingriff eines im Sattelbereich des Gehäuses angeordneten Gewindes der Bandspannschraube aufweist.

Bei herkömmlichen Schlauchschellen, bei denen Sattel und Gehäuse einstückig miteinander verbunden sind, werden Fügestellen überwiegend durch Biegenasen geschlossen, während das Band in der Tunnelöffnung formschlüssig mit dem Gehäuse verbunden wird. Die bekannten Schlauchschellen haben vor allem fertigungstechnische Nachteile, da die Sattelmontage am Band, das Einbringen der Schraube, das Aufsetzen des Gehäuses sowie das Verschlreßen des Gehäuses relativ komplizierte und nicht automatengerechte Vorgänge darstellen. Zur Verbesserung in fertigungstechnischer Hinsicht wurde bereits die Widerstandsschweißtechnik (Punktschweißung) beim Verbinden des Gehäuses mit dem Band eingesetzt (US-A-2 477 045, FR-A-1 215 738), die jedoch nur überlappte Schweißungen zuläßt. Das mit dem Gehäuse verschweißte Bandende ist dort gekröpft und durch das Gehäuseinnere hindurchgeführt, so daß sich Unebenheiten \bilden, die sich in das Schlauchmaterial einkerben können. Weiter läßt das Widerstandsschweißen auch hinsichtlich der Prozeßsicherheit zu wünschen übrig, da eine zerstörungsfreie Prüfung während des Schweißvorgangs nicht möglich ist und die Schweißnähte daher nur stichprobenhaft geprüft werden können. Ein weiterer Nachteil dieser Verbindungstechnik wird darin gesehen, daß sich im Bereich der Schweißnähte Wülste oder Vertiefungen bilden, die sich bei der Befestigung der Schlauchschellen in das Schlauchmaterial einkerben und dabei zu Funktionsstörungen, insbesondere zu einem frühzeitigen Verschleiß, führen können.

Ausgehend hiervon liegt der Erfindung die Aufgabe zugrunde, eine neuartige Schlauchschelle zu entwickeln, die einfach und automatengerecht herstellbar ist und zugleich hohe Anforderungen an die Prozeßsicherheit und an die funktionelle Zuverlässigkeit erfüllt.

Zur Lösung dieser Aufgabe werden Schlauchschellen gemäß den Ansprüchen 1, 3 und 4 vorgeschlagen. Umfangreiche Untersuchungen haben gezeigt, daß mit der Laserschweißtechnik wulst-, vertiefungs- und ansatzfreie Schweißungen auch im Bereich von Stoßfugen möglich sind, eine Grundvoraussetzung für die Anwendung bei Schlauchschellen. Erst damit ist es möglich, von der einfach zugänglichen Bandinnenseite (also von der später gegen die Schlauchoberfläche anliegenden Seite) her wulst- und vertiefungsfrei zu schweißen. Durch die Möglichkeit einer zerstörungsfreien On-line-Überwachung der Laserschweißnaht wird ein hohes Maß an Prozeßsicherheit bei der Automatenfertigung erzielt. Die relativ einfach durchzuführenden Schweißvorgänge ermöglichen es schließlich, das Gehäuse trotz seiner komplizierten äußeren Gestalt als einstückiges Biegeteil oder Biegestanzteil (statt der sonst üblichen Tiefziehteile) herzustellen, mit entsprechend geringerem Fertigungs- und Werkzeugaufwand und kürzeren Taktzeiten.

Eine erste Ausgestaltung der Erfindung sieht vor, daß der Sattel und/oder die Lagerstelle paarweise spiegelbildlich zueinander angeordnete, unter Bildung einer vorzugsweise in Bandlängsrichtung ausgerichteten Stoßfuge gegeneinandergebogene Biegelappen aufweisen, die paarweise an den Stoßfugen durch Laser-Schweißnähte miteinander verbunden sind. Zweckmäßig sind dabei die einander benachbarten Biegelappen des Sattels und der Lagerstelle durch je einen einen Bandaustritt der Tunnelöffnung bildenden Freischnitt voneinander getrennt.

Gemäß einer zweiten Ausgestaltung der Erfindung ist das eine Bandende mit seiner freien Stirnkante mittels einer Laserschweißnaht stumpf an der lagerstellenseitigen Sattelkante vorzugsweise von der Bandinnenseite her angeschweißt. Zur besseren Abstützung des in die Tunnelöffnung eingeführten Bandendes kann in diesem Falle an der gegenüberliegenden Sattelkante eine frei überstehende, vorzugsweise in Bandrichtung gekrümmte, Zunge angeordnet, vorzugsweise angeformt werden, die ihrerseits in Verlängerung der Sattelnaht geschweißt oder gefügt sein kann.

Eine weitere dritte Möglichkeit zur Anbringung des einen Bandendes am Sattel besteht darin, daß das betreffende Bandende ungekröpft an der äußeren Breitseite des Sattels mittels einer überlappenden Laserschweißnaht, vorzugsweise von der Bandinnenseite her, angeschweißt wird. Alternativ dazu kann das eine Bandende im Bereich einer Kröpfung an der inneren Breitseite des Sattels mittels einer überlappenden Laserschweißnaht vorzugsweise von der Bandinnenseite her angeschweißt werden. Eine weitere Herstellungsvariante besteht darin, daß der am Gehäuse integrierte, biegetechnisch angeformte Sattel entfällt und stattdessen das eine Bandende unter Bildung des Sattels an seinen Seitenrändern mittels zweier Laserschweißnähte im Randkantenbereich zweier einander gegenüberliegender Gehäuselappen, vorzugsweise von der Bandinnenseite her, angeschweißt ist.

Bei den drei genannten Lösungsvarianten kann das angeschweißte Bandende mit seinem freien Teil mehr oder weniger weit zungenartig nach der der Lagerstelle gegenüberliegenden Seite über den Sattel überstehen und dadurch die Perforationen oder Einprägungen des anderen Bandendes nach dem Bandinneren (zum Schlauch hin) abdekken.

Um eine ausreichend breite Öffnung für den Austritt des freien Bandendes aus der Tunnelöffnung zu erzeugen, ist es vorteilhaft, wenn die Laserschweißnähte der Lagerstelle und des Sattels unter Freilassung des Bandaustritts stufenartig gegeneinander versetzt sind. Zur Verbesserung der Bandführung kann der Sattel lagerstellenseitig zusätzlich mit einer laschenartigen, vorzugsweise in Bandrichtung gekrümmten, Verlängerung versehen werden.

Die Handhabung der Schlauchschelle wird durch einen Schnellverschluß erleichtert, der sowohl beim Einführen als auch beim Herausziehen des freien Bandendes aus der Durchstecköffnung betätigt werden kann und der gemäß der Erfindung darin besteht, daß die Bandspannschraube mit einem Kopfteil axial und radial in der Lagerstelle gelagert ist und an ihrem dem Kopfkeil gegenüberliegenden Ende ein Kurzgewinde trägt, das durch axiales Verschieben der Bandspannschraube vollständig aus seinem Eingriffsbereich mit der Bandperforation oder -prägung axial herausbewegbar ist. Das Kopfteil der Bandspannschraube wird dabei unter der Einwirkung einer elastischen Vorspannung (bei losem Band) oder der beim Aufspannen der Schlauchschelle auf einen Schlauch erzeugten Vorspannung des mit dem Kurzgewinde gekoppelten Bandes mit einer Axialschulter gegen eine das Axiallager bildende Außenkante der Lagerstelle angedrückt. Besonders vorteilhaft ist es, wenn im Bereich der Lagerstelle mindestens ein, vorzugsweise als Biegenase ausgebildeter und zugleich als Verliersicherung dienender Anschlag für eine das Kurzgewinde kopfseitig begrenzende Ringschulter angeordnet ist. Um das Kurzgewinde beim Entkupplungsvorgang leichter aus der Perforation herausheben zu können, weist die Bandspannschraube einen zwischen Kopfteil und Kurzgewinde angeordneten Schaftteil mit reduziertem Durchmesser auf, der vorzugsweise um ein Mehrfaches länger als das Kurzgewinde ist.

Gemäß einer weiteren bevorzugten Ausgestaltung der Erfindung ist das Kurzgewinde im Sattelbereich des Gehäuses radial gelagert, während der Sattel eine teilzylindrische Vertiefung zur Aufnahme des durch die Bandperforationen hindurchgreifenden Kurzgewindes aufweisen kann.

Zur weiteren Verbesserung der Eingriffstiefe des Gewindes der Bandspannschraube wird gemäß der Erfindung vorgeschlagen, daß das Metallband im Bereich der die Perforationen begrenzenden Querstege gegenüber den sich zum Seitenrand hin anschließenden Randstreifen zur Bandaußenseite (und damit zur Gehäuseinnenseite) hin ausgeprägt ist. Mit dieser Maßnahme wird zugleich erreicht, daß das Metallband vornehmlich mit den Randstreifen gegen die Schlauchoberfläche anliegt, so daß ein unerwünschtes formschlüssiges Einkerben des Schlauchmaterials in die Perforationen des Metallbandes vermieden wird. Die Querstege sind dabei zweckmäßig zur Bandaußenseite hin konvex gewölbt. Sie können aber auch trapezförmig oder wellenförmig gebogen sein, wobei im letzteren Fall der Vorteil erreicht wird, daß die in die Perforationen eingreifenden Gewindebindungen bei sonst gleichen Abmessungen über einen größeren Umfangsabschnitt an den Querstegen abgestützt werden.

Im folgenden wird die Erfindung anhand einiger in der Zeichnung in schematischer Weise dargestellter Ausführungsbeispiele näher erläutert. Es zeigen:
- Fig. 1a und b: eine Seitenansicht und eine Stirnseitenansicht einer Schlauchschelle mit stumpf angeschweißtem Metallband;
- Fig. 2: eine Untenansicht der Schlauchschelle nach Fig. 1a und b;
- Fig. 3: eine Seitenansicht einer Schlauchschelle mit Überlappungsschweißung am Außenband und überstehender Abdeckzunge;
- Fig. 4: eine Seitenansicht einer Schlauchschelle mit Überlappungsschweißung am Außenband ohne Zunge;
- Fig. 5a und b: eine Seitenansicht und eine Stirnseitenansicht einer Schlauchschelle mit eingeschweißtem Band mit Sattelfunktion;
- Fig. 6a bis d: ein Gehäuse einer Schlauchschelle in perspektivischer Darstellung sowie in drei Schnittdarstellungen;
- Fig. 7: eine Seitenansicht der Bandspannschraube einer Schlauchschelle;
- Fig. 8a und b: einen Schnitt durch und eine Draufsicht auf ein Metallband mit konvex ausgeprägtem Perforationsbereich;
- Fig. 9: einen Schnitt durch ein Metallband mit trapezförmig ausgeprägtem Perforationsbereich;
- Fig. 10: einen Schnitt durch ein Metallband mit wellenförmig ausgeprägtem Perforationsbereich.

Die in der Zeichnung dargestellten Schlauchschellen bestehen im wesentlichen aus einem eine Lagerstelle 10 für eine Bandspannschraube 12 sowie einen Sattel 14 aufweisenden metallischen Gehäuse 16 und einem ringförmig gebogenen flachen Metallband 18. Das Metallband 18 ist im Bereich seines einen Endes 20 starr mit dem Sattel 14 verbunden und mit seinem anderen, freien Ende 22 durch eine sattelnahe Tunnelöffnung 24 des Gehäuses 16 hindurchführbar. Weiter weist das Metallband 18 zumindest in der Nähe seines freien Endes 22 eine rasterartige Folge von Perforationen 26 mit schräg verlaufenden Querstegen 28 für den Eingriff des im Sattelbereich des Gehäuses 16 angeordneten Gewindes 30 der Bandspannschraube 12 auf. Das Gehäuse 16 ist als Biegestanzteil ausgebildet, das an Stoßfugen 32, 34 im Bereich der Lagerstelle 10 bzw. des Sattels 14 mittels je einer Laserschweißnaht 36 bzw. 38 zusammengefügt ist. Die Fugenschweißungen werden zweckmäßig als Linienschweißungen ausgeführt, während Überlappungsschweißungen als Punktschweißungen (YAG-Laser) oder als Systemschweißungen (mit Quer- und Längs-Punktnähten) ausgeführt sind.

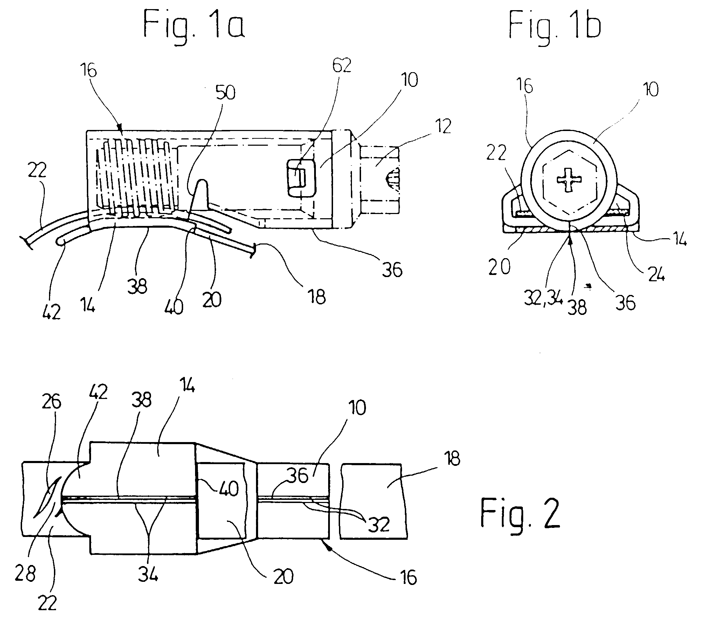

Bei dem Ausführungsbeispiel nach Fig. 1a, 1b und 2 ist das Bandende 20 an seiner Stirnkante stumpf mittels einer quer verlaufenden Laser-Linien-Naht 40 an der lagerstellenseitigen Kante des Sattels 14 angeschweißt. Die Fugennähte 32, 34 sind dort längs verlaufende Laser-Linien-Nähte. An der der Lagerstelle 10 abgewandten Kante des Sattels 14 ist eine Zunge 42 angeformt, die in Bandrichtung abgebogen ist (Fig. 1a).

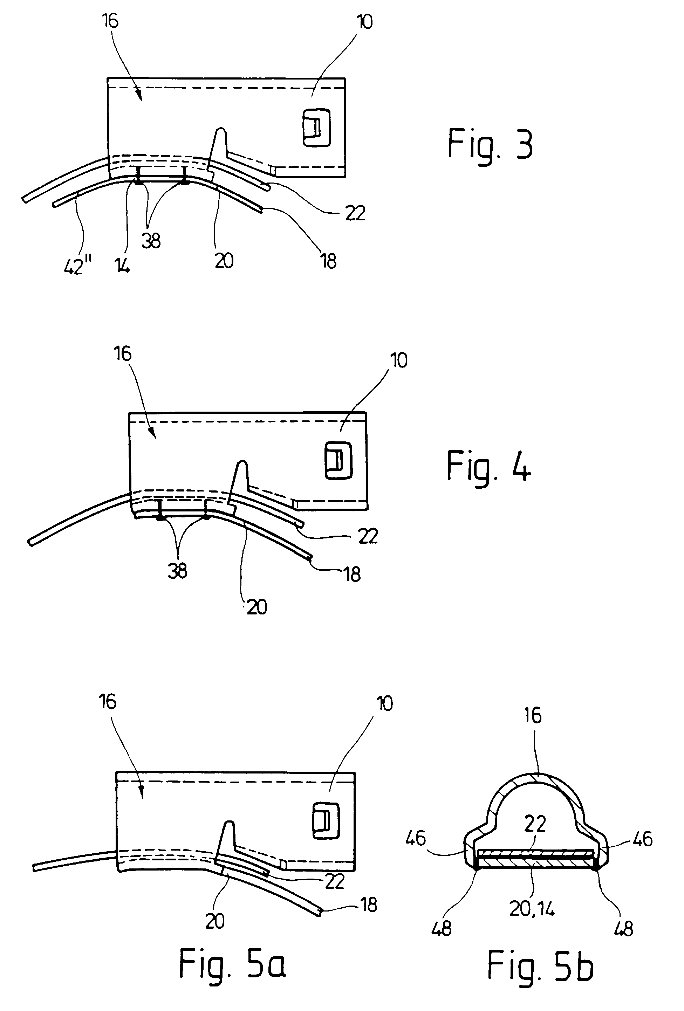

Bei den Ausführungsbeispielen nach Fig. 3 und 4 ist das ungekröpfte Bandende 20 außenseitig am Sattel 14 mit einer überlappenden Laser-Punktschweißnaht oder einer Systemschweißnaht angeschweißt, und zwar entweder mit Verlängerungszunge 42" (Fig. 3) oder ohne eine solche (Fig. 4).

Bei der Schlauchschelle nach Fig. 5a und b ist das Bandende 20 mit seinen beiden Seitenrändern an den Unterkanten zweier einander gegenüberliegender Biegelappen 46 des Gehäuses 16 mittels längs verlaufender Laser-Schweißnähte 48 verbunden. Damit übernimmt das Metallband 18 in diesem Bereich die Sattelfunktion der Schlauchschelle.

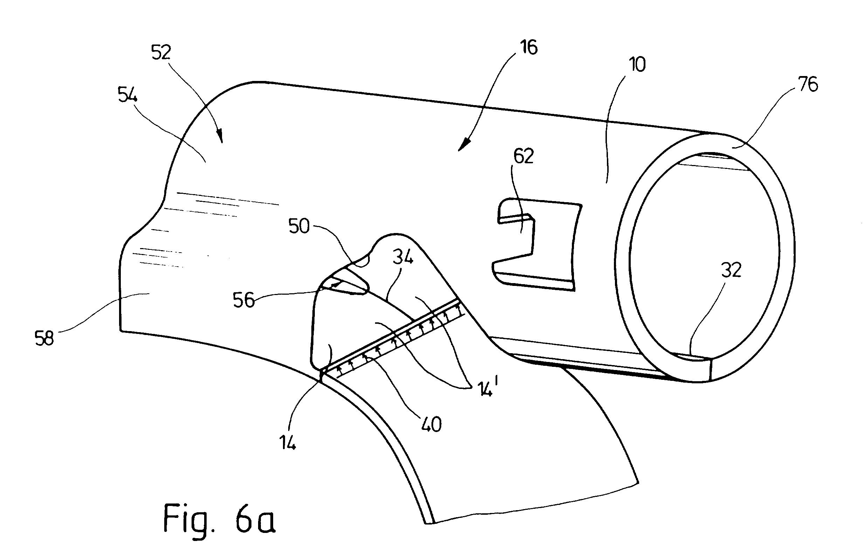

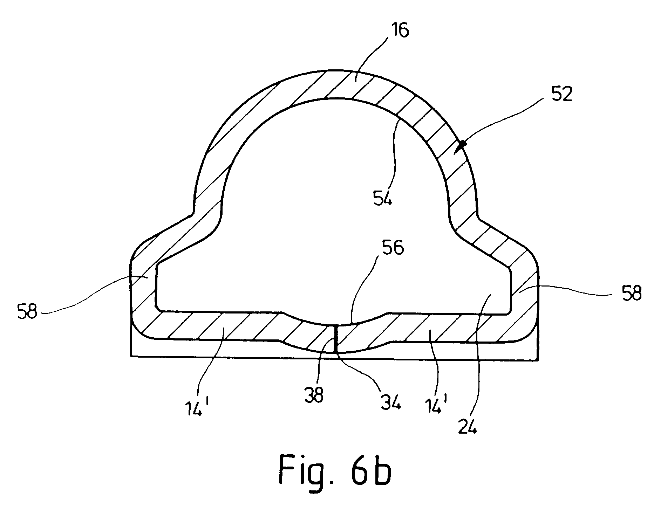

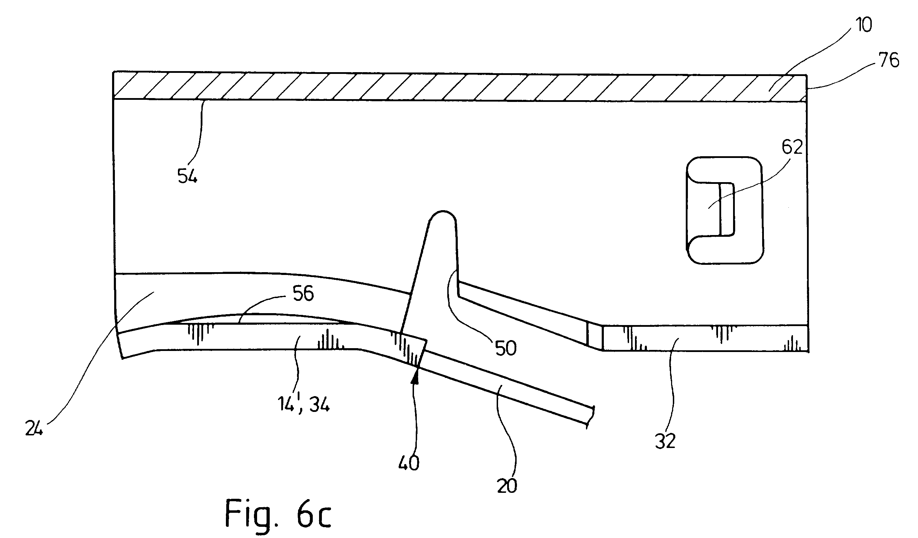

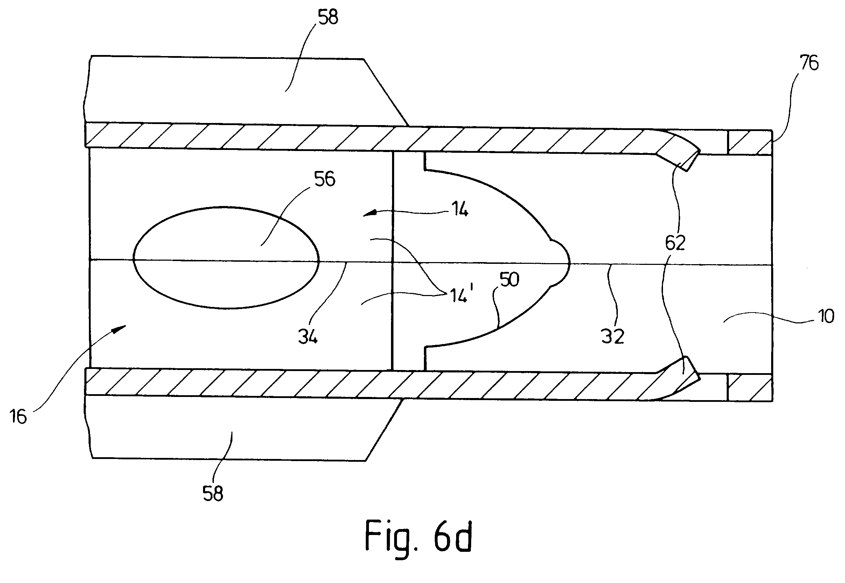

Wie aus den Fig. 6a bis d zu ersehen ist, ist das Gehäuse 16 als Metallbiegeteil ausgebildet, dessen Zuschnitt durch einen Freischnitt 50 in zwei Bereiche unterteilt ist, nämlich in die zu einem Zylinderrohr gebogene Lagerstelle 10 und den den Sattel 14 aufweisenden Bandführungs- und Spannteil 52. Der Bandführungs- und Spannteil weist in seinem oberen Bereich eine halbzylindrisch gekrümmte Lagerrinne 54 für das Gewinde 30 der Bandspannschraube 12 auf, die im Stoßbereich des Sattels 14 durch eine teilzylindrische Vertiefung 56 zu einem das Gewinde abstützenden Gleitlager ergänzt wird. Die sich an die Lagerrinne 54 anschließenden verbreiterten Gehäuseteile 58 begrenzen zusammen mit den beiden nach innen gebogenen Sattellappen 14' den Tunnel 24 für den Durchtritt des freien Bandendes 22. Die Sattellappen 14' sind an der Stoßfuge 34 mittels einer Laser-Schweißnaht 38 verschweißt, während die Lagerstelle 10 an der Stoßfuge 32 durch eine Laser-Schweißnaht 36 zusammengefügt ist. Bei dem in Fig. 6a bis c gezeigten Ausführungsbeispiel ist das Metallband 18 (wie im Falle der Fig. 1) mittels einer quer verlaufenden Laser-Schweißnaht 40 stumpf an die lagerstellenseitige Kante des Sattels 14 angeschweißt. An der Lagerstelle 10 können bei eingesetzter Bandspannschraube zwei auf einander gegenüberliegenden Seiten angeordnete Biegenasen 62 eingedrückt werden, die als Anschlag und als Verliersicherung für die Bandspannschraube dienen.

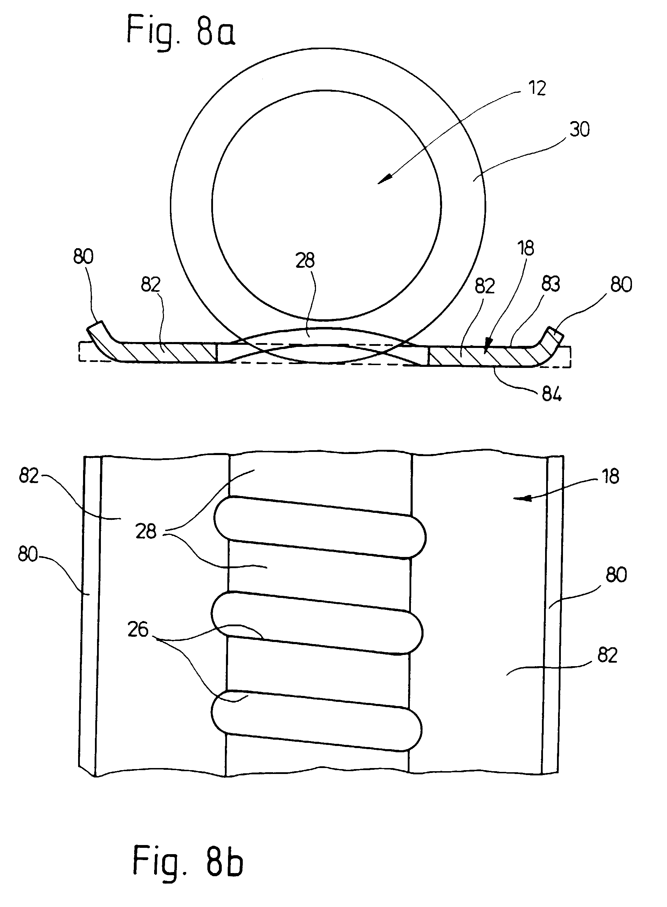

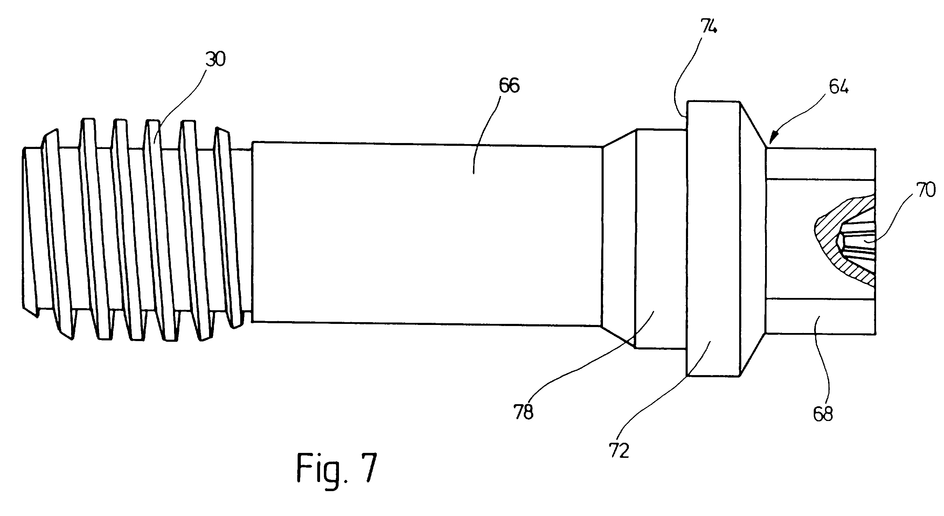

Wie insbesondere aus Fig. 7 zu ersehen ist, besteht die Bandspannschraube 12 aus einem Kopfteil 64 und einem am gegenüberliegenden Ende angeordneten Kurzgewinde 30, die durch einen im Durchmesser reduzierten Schaft 66 voneinander getrennt sind. Das Kopfteil 64 ist an seinem freien Ende mit einem Sechskantzapfen 68 versehen, der stirnseitig einen Kreuzschlitz 70 zum Ansetzen eines Schraubendrehers aufweist. Der an den Sechskantzapfen 68 anschließende Kopf 72 weist eine Anschlagschulter 74 auf, die im Betriebszustand gegen die als Axiallager dienende Stirnkante 76 der Lagerstelle 10 anschlägt. Der sich an die Anschlagschulter 74 anschließende zylindrische Bolzenteil 78 greift in diesem Zustand in die zylindrische Lagerstelle 10 ein und bildet gemeinsam mit dieser ein Radiallager. Das Kurzgewinde 30 wird in diesem Zustand in der Lagerrinne 54 und der Vertiefung 56 geführt und greift mit seinen Gewindegängen in die Perforationen 26 im freien Ende 22 des Metallbandes 18 ein (vergl. hierzu auch Fig. 8 bis 10). Durch Zurückziehen der Bandspannschraube 12 bis zum Anschlag des Kurzgewindes 30 an den Biegenasen 62 in der Lagerstelle 10 wird der Durchtritt durch den Tunnel 24 völlig freigemacht, so daß das freie Bandende 22 zum Zwecke der Schnellmontage frei eingeschoben oder herausgezogen werden kann. Im montierten Zustand steht die im Eingriff mit dem freien Ende 22 befindliche Bandspannschraube 12 unter der Einwirkung der elastischen Vorspannung des Metallbandes 18 oder der Einspannung auf einem Schlauch, wodurch die Bandspannschraube 12 mit ihrer Anschlagschulter 74 selbsttätig gegen die Stirnkante 76 des Gehäuses gezogen wird.

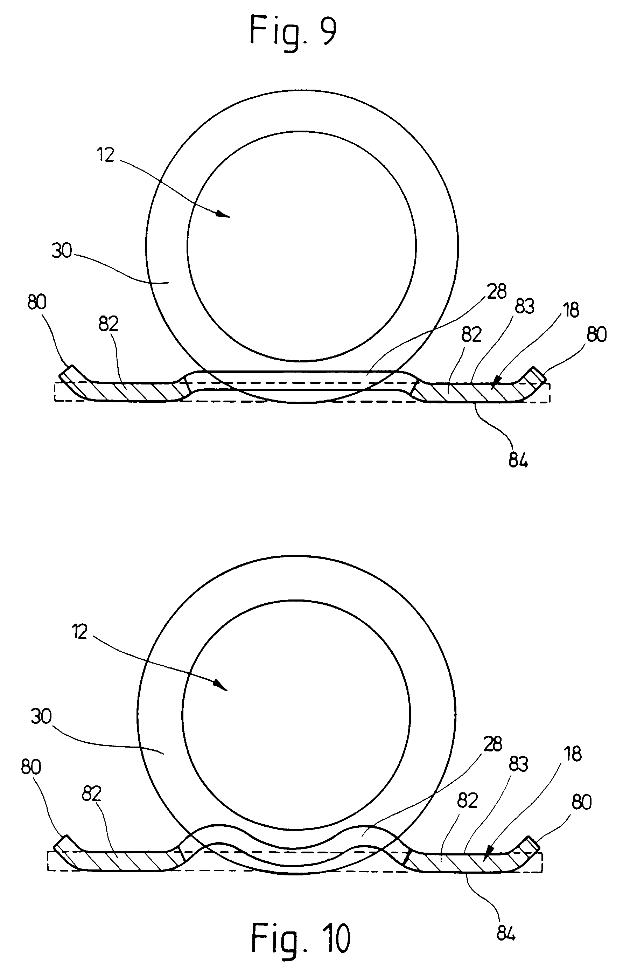

In den Fig. 8 bis 10 sind drei Varianten des freien Bandendes 22 im Eingriff mit dem Gewinde 30 der Bandspannschraube 12 gezeigt. In allen drei Fällen ist das Metallband im Bereich der die Perforationen 26 begrenzenden Querstege 28 gegenüber den sich zu den Seitenrändern 80 hin anschließenden Randstreifen 82 zur Bandaußenseite 83 und damit zum Gewinde hin ausgeprägt. Im Falle der Fig. 8 ist die Ausprägung konvex gekrümmt, im Falle der Fig. 9 trapezförmig und im Falle der Fig. 10 wellenförmig. Mit dieser Maßnahme wird einmal der Eingriff des Gewindes 30 in die Perforationen verbessert. Zum anderen wird damit erreicht, daß sich die Perforationen 26 und deren Querstege 28 auf der Bandinnenseite 84 nicht in unerwünschter Weise in das zu spannende Schlauchmaterial einprägen können.

Zusammenfassend ist folgendes festzustellen: Die Erfindung bezieht sich auf eine Schlauchschelle mit einem eine Lagerstelle 10 für eine Bandspannschraube 12 und einen Sattel 14 aufweisenden metallischen Gehäuse 16 und einem ringförmig gebogenen flachen Metallband 18. Das Metallband 18 ist im Bereich seines einen Endes 20 starr mit dem Sattel 14 verbunden und mit seinem anderen, freien Ende 22 durch eine sattelnahe Tunnelöffnung 24 des Gehäuses 16 hindurchführbar. Weiter weist das Metallband 18 im Bereich seines freien Endes 22 eine rasterartige Folge von Perforationen 26 mit schräg verlaufenden Querstegen 28 für den Eingriff eines im Sattelbereich 14 des Gehäuses 16 angeordneten Kurzgewindes 30 der Bandspannschraube 12 auf. Um eine automatengerechte Fertigung mit hoher Prozeßsicherheit zu ermöglichen, ist das Gehäuse als einstückiges Biegeteil ausgebildet, das an Fügestellen 32, 34 im Bereich der Lagerstelle 10 und des Sattels 14 mittels je einer Laser-Schweißnaht 36, 38 zusammengefügt ist. Zusätzlich ist das eine Bandende 20 mit einer weiteren Laser-Schweißnaht 40 entweder stumpf oder überlappend am Sattel 14 angeschweißt. Die Bandspannschraube 12 ist mit einem Kopfteil 64 axial und radial in der Lagerstelle 10 gelagert und trägt an ihrem dem Kopfteil 64 gegenüberliegenden Ende ein Kurzgewinde 30. Das Kurzgewinde 30 kann vollständig aus seinem Eingriffsbereich mit der Bandperforation 26 axial herausbewegt werden, so daß eine Schnellmontage möglich ist.

## Patentansprüche

1. Schlauchschelle mit einem eine Lagerstelle (10) für eine Bandspannschraube (12) und einen Sattel (14) aufweisenden metallischen Gehäuse (16) und einem ringförmig gebogenen flachen Metallband (18), das in der Nähe seines einen Endes (20) starr mit dem Sattel (14) verbunden ist und mit seinem anderen freien Ende (22) durch eine sattelnahe Tunnelöffnung (24) des Gehäuses hindurchführbar ist und das eine rasterartige Folge von Perforationen (26) oder Prägungen mit schräg verlaufenden Querstegen (28) für den Eingriff eines im Sattelbereich (14) des Gehäuses (16) angeordneten Gewindes (30) der Bandspannschraube (12) aufweist, wobei das Gehäuse (16) als Biegeformteil ausgebildet ist, das an Fügestellen (32,34) im Bereich der Lagerstelle (10) und/ oder des Sattels (14) an mindestens einer Schweißstelle (36,38) zusammengefügt und/oder mit dem einen Bandende (20) verbunden ist, **dadurch gekennzeichnet**, daß die zusammenfügende Schweißstelle eine Laser-Schweißnaht ist und daß das eine Bandende (20) mit seiner freien Stirnkante mittels einer Laser-Schweißnaht (40) stumpf an einer lagerstellenseitigen Sattelkante von der Bandinnenseite (84) her angeschweißt ist.

2. Schlauchschelle nach Anspruch 1, **dadurch gekennzeichnet**, daß an der der Lagerstelle (10) gegenüberliegenden Sattelkante eine frei überstehende, vorzugsweise in Bandrichtung gekrümmte Zunge (42) angeordnet, vorzugsweise angeformt ist.

3. Schlauchschelle mit einem eine Lagerstelle (10) für eine Bandspannschraube (12) und einen Sattel (14) aufweisenden metallischen Gehäuse (16) und einem ringförmig gebogenen flachen Metallband (18), das in der Nähe seines einen Endes (20) starr mit dem Sattel (14) verbunden ist und mit seinem anderen freien Ende (22) durch eine sattelnahe Tunnelöffnung (24) des Gehäuses hindurchführbar ist und das eine rasterartige Folge von Perforationen (26) oder Prägungen mit schräg verlaufenden Querstegen (28) für den Eingriff eines im Sattelbereich (14) des Gehäuses (16) angeordneten Gewindes (30) der Bandspannschraube (12) aufweist, wobei das Gehäuse (16) als Biegeformteil ausgebildet ist, das an Fügestellen (32,34) im Bereich der Lagerstelle (10) und/ oder des Sattels (14) an mindestens einer Schweißstelle (36,38) zusammengefügt und/oder mit dem einen Bandende (20) verbunden ist, **dadurch gekennzeichnet**, daß die zusammenfügende Schweißstelle eine Laser-Schweißnaht ist und daß das eine Bandende (20) ungekröpft ist und an der äußeren Breitseite des Sattels (14) mittels einer überlappenden Laser-Schweißnaht von der Bandinnenseite (84) her angeschweißt ist.

4. Schlauchschelle mit einem eine Lagerstelle (10) für eine Bandspannschraube (12) und einen Sattel (14) aufweisenden metallischen Gehäuse (16) und einem ringförmig gebogenen flachen Metallband (18), das in der Nähe seines einen Endes (20) starr mit dem Sattel (14) verbunden ist und mit seinem anderen freien Ende (22) durch eine sattelnahe Tunnelöffnung (24) des Gehäuses hindurchführbar ist und das eine rasterartige Folge von Perforationen (26) oder Prägungen mit schräg verlaufenden Querstegen (28) für den Eingriff eines im Sattelbereich (14) des Gehäuses (16) angeordneten Gewindes (30) der Bandspannschraube (12) aufweist, wobei das Gehäuse (16) als Biegeformteil ausgebildet ist, das an Fügestellen (32,34) im Bereich der Lagerstelle (10) und/ oder des Sattels (14) an mindestens einer Schweißstelle (36,38) zusammengefügt und/oder mit dem einen Bandende (20) verbunden ist, **dadurch gekennzeichnet**, daß die zusammenfügende Schweißstelle eine Laser-Schweißnaht ist und daß das eine Bandende unter Bildung des Sattels (14) an seinen Seitenrändern mittels zweier Laser-Schweißnähte (48) im Randkantenbereich zweier einander gegenüberliegender Gehäuselappen (46) von der Bandinnenseite (84) her angeschweißt ist.

5. Schlauchschelle nach Anspruch 3 oder 4, **dadurch gekennzeichnet**, daß das angeschweißte Bandende (20) mit einem freien Teil (42") zungenartig nach der der Lagerstelle gegenüberliegenden Seite über den Sattel (14) übersteht.

6. Schlauchschelle nach einem der Ansprüche 1 bis 5, **dadurch gekennzeichnet**, daß der Sattel (14) und/ oder die Lagerstelle (10) paarweise spiegelbildlich zueinander angeordnete, unter Bildung einer vorzugsweise in Bandlängsrichtung ausgerichteten Stoßfuge (32,34) gegeneinandergebogene Biegelappen (14') aufweisen, die paarweise an ihren Stoßfugen (32,34) durch Laser-Schweißnähte (36,38) miteinander verbunden sind.

7. Schlauchschelle nach Anspruch 6, **dadurch gekennzeichnet**, daß die einander benachbarten Biegelappen (14') des Sattels (14) und/oder der Lagerstelle (10) durch je einen einen Bandaustritt der Tunnelöffnung (24) bildenden Freischnitt (50) voneinander getrennt sind.

8. Schlauchschelle nach einem der Ansprüche 1 bis 7, **dadurch gekennzeichnet**, daß die Laser-Schweißnähte (36,38) der Lagerstelle (10) und des Sattels (14) unter Freilassung eines Bandaustritts stufenartig gegeneinander versetzt sind.

9. Schlauchschelle nach einem der Ansprüche 1 bis 8, **dadurch gekennzeichnet**, daß der Sattel (14) lagerstellenseitig eine laschenartige, vorzugsweise in Bandrichtung gekrümmte Verlängerung aufweist.

10. Schlauchschelle nach Anspruch 1 oder 4, **dadurch gekennzeichnet**, daß die Laser-Schweißnähte als Linien-Nähte ausgebildet sind.

11. Schlauchschelle nach Anspruch 3, **dadurch gekennzeichnet**, daß die überlappende Laser-Schweißnaht als Punktschweißnaht oder als aus Quer- und Längs-Punktnähten bestehende Systemschweißnaht ausgebildet ist.

## Claims

1. Hose clip having a metal housing (16), comprising a bearing point (10) for a band-tightening screw (12) and a saddle (14), and having an annularly bent flat metal band (18) which in the vicinity of its one end (20) is rigidly connected to the saddle (14) and with its other free end (22) may be passed through a tunnel opening (24) disposed in the housing near the saddle and which has a grid-like sequence of perforations (26) or stamped portions with obliquely extending transverse webs (28) for the engagement of a thread (30) of the band-tightening screw (12), which thread is disposed in the saddle region (14) of the housing (16), the housing (16) taking the form of a bent shaped part which is joined at joining points (32, 34) in the region of the bearing point (10) and/or of the saddle (14) by at least one weldment joint (36, 38) and/or is connected to the one band end (20), **characterized in that** the assembly weldment joint is a laser weld seam and that the free front edge of the one band end (20) is butt-welded from the inside (84) of the band to a saddle edge on the bearing point side by means of a laser weld seam (40).

2. Hose clip according to claim 1, **characterized in that** a freely projecting tongue (42) preferably curved in band direction is disposed, preferably formed, on the saddle edge opposite the bearing point (10)

3. Hose clip having a metal housing (16), comprising a bearing point (10) for a band-tightening screw (12) and a saddle (14), and having an annularly bent flat metal band (18) which in the vicinity of its one end (20) is rigidly connected to the saddle (14) and with its other free end (22) may be passed through a tunnel opening (24) disposed in the housing near the saddle and which has a grid-like sequence of perforations (26) or stamped portions with obliquely extending transverse webs (28) for the engagement of a thread (30) of the band-tightening screw (12), which thread is disposed in the saddle region (14) of the housing (16), the housing (16) taking the form of a bent shaped part which is joined at joining points (32, 34) in the region of the bearing point (10) and/or of the saddle (14) by at least one weldment joint (36, 38) and/or is connected to the one band end (20), **characterized in that** the assembly weldment joint is a laser weld seam and that the one band end (20) is not bent and is welded from the inside (84) of the band to the outer broad side of the saddle (14) by means of an overlapping laser weld seam.

4. Hose clip having a metal housing (16), comprising a bearing point (10) for a band-tightening screw (12) and a saddle (14), and having an annularly bent flat metal band (18) which in the vicinity of its one end (20) is rigidly connected to the saddle (14) and with its other free end (22) may be passed through a tunnel opening (24) disposed in the housing near the saddle and which has a grid-like sequence of perforations (26) or stamped portions with obliquely extending transverse webs (28) for the engagement of a thread (30) of the band-tightening screw (12), which thread is disposed in the saddle region (14) of the housing (16), the housing (16) taking the form of a bent shaped part which is joined at joining points (32, 34) in the region of the bearing point (10) and/or of the saddle (14) by at least one weldment joint (36, 38) and/or is connected to the one band end (20), **characterized in that** the assembly weldment joint is a laser weld seam and that the one band end (20) so as simultaneously to form the saddle (14) is welded on from the inside (84) of the band at its side edges by means of two laser weld seams (48) in the edge region of two opposite-lying housing lugs (46).

5. Hose clip according to claim 3 or 4, **characterized in that** a free part (42") of the welded-on band end (20) projects in a tongue-like manner beyond the saddle (14) towards the side opposite the bearing point.

6. Hose clip according to one of claims 1 to 5, **characterized in that** the saddle (14) and/or the bearing point (10) comprise bent lugs (14'), which are disposed in pairs in a mirror-inverted manner relative to one another and bent towards one another so as to form a butt joint (32, 34) preferably aligned in a longitudinal direction of the band and which are connected in pairs to one another at their butt joints (32, 34) by laser weld seams (36, 38).

7. Hose clip according to claim 6, **characterized in that** the adjacent bent lugs (14') of the saddle (14) and/or of the bearing point (10) are separated from one another in each case by a relief cut (50) forming a band outlet of the tunnel opening (24).

8. Hose clip according to one of claims 1 to 7, **characterized in that** the laser weld seams (36, 38) of the bearing point (10) and of the saddle (14) are offset in a stepped manner relative to one another so as to leave a band outlet free.

9. Hose clip according to one of claims 1 to 8, **characterized in that** the saddle (14) on the bearing point side has a bracket-like extension which is preferably curved in band direction.

10. Hose clip according to claim 1 or 4, **characterized in that** the laser weld seams take the form of line seams.

11. Hose clip according to claim 3, **characterized in that** the overlapping laser weld seam takes the form of a spot weld seam or a system weld seam comprising transverse and longitudinal spot seams.

## Revendications

1. Collier de serrage de tuyaux, comprenant un boîtier métallique (16) muni d'un élément d'appui (10) pour une vis de serrage de bande (12) et d'une selle (14), et une bande métallique (18) plate cintrée en anneau, qui est solidarisée avec la selle (14) à proximité de l'une de ses extrémités (20) et dont l'autre extrémité libre (22) peut être passée au travers d'une ouverture de tunnel (24) du boîtier située à proximité de la selle, et qui porte une succession de perforations (26) ou d'empreintes en forme de trame, avec des nervures transversales (28) inclinées pour l'engrènement d'un filetage (30) de la vis de serrage de bande (12) disposé dans la région de la selle (14) du boîtier (16), le boîtier (16) étant réalisé sous la forme d'une pièce pliée réunie aux joints (32, 34) dans la région de l'élément d'appui (10) et/ou de la selle (14) par au moins une soudure (36, 38) et/ou rattachée à l'une des extrémités (20) de la bande, **caractérisé en ce** que la soudure à réaliser est une soudure à laser et que le bord frontal libre de l'extrémité (20) de la bande est soudé bout à bout, au moyen d'une soudure à laser (40), à partir de la surface intérieure (84) de la bande, sur le bord de la selle situé du côté de l'élément d'appui.

2. Collier de serrage de tuyaux selon la revendication 1, caractérisé en ce que sur le bord de la selle opposé à l'élément d'appui (10) est disposée, de préférence conformée, une languette (42) courbée de préférence dans la direction de la bande et dépassant librement.

3. Collier de serrage de tuyaux, comprenant un boîtier métallique (16) muni d'un élément d'appui (10) pour une vis de serrage de bande (12) et d'une selle (14), et une bande métallique (18) plate cintrée en anneau, qui est solidarisée avec la selle (14) à proximité de l'une de ses extrémités (20) et dont l'autre extrémité libre (22) peut être passée au travers d'une ouverture de tunnel (24) du boîtier située à proximité de la selle, et qui porte une succession de perforations (26) ou d'empreintes en forme de trame, avec des nervures transversales (28) inclinées pour l'engrènement d'un filetage (30) de la vis de serrage de bande (12) disposé dans la région de la selle (14) du boîtier (16), le boîtier (16) étant réalisé sous la forme d'une pièce profilée pliée réunie aux joints (32, 34) dans la région de l'élément d'appui (10) et/ou de la selle (14) par au moins une soudure (36, 38) et/ou rattachée à l'une des extrémités (20) de la bande, caractérisé en ce que la soudure à réaliser est une soudure à laser, et que l'extrémité (20) de la bande n'est pas coudée et qu'elle est soudée sur le large côté extérieur de la selle (14), au moyen d'une soudure à laser à recouvrement, à partir de la surface intérieure (84) de la bande.

4. Collier de serrage de tuyaux, comprenant un boîtier métallique (16) muni d'un élément d'appui (10) pour une vis de serrage de bande (12) et d'une selle (14), et une bande métallique (18) plate cintrée en anneau, qui est solidarisée avec la selle (14) à proximité de l'une de ses extrémités (20) et dont l'autre extrémité libre (22) peut être passée au travers d'une ouverture de tunnel (24) du boîtier située à proximité de la selle, et qui porte une succession de perforations (26) ou d'empreintes en forme de trame, avec des nervures transversales (28) inclinées pour l'engrènement d'un filetage (30) de la vis de serrage de bande (12) disposé dans la région de la selle (14) du boîtier (16), le boîtier (16) étant réalisé sous la forme d'une pièce profilée pliée réunie aux joints (32, 34) dans la région de l'élément d'appui (10) et/ou de la selle (14) par au moins une soudure (36, 38) et/ou rattachée à l'une des extrémités (20) de la bande, caractérisé en ce que la soudure à réaliser est une soudure à laser et que l'une des extrémités de la bande est soudée sur ses bords latéraux, avec formation de la selle (14), à partir de la surface intérieure (84) de la bande, au moyen de deux soudures à laser (48) dans la région des bords latéraux de deux pattes de boîtier (46) disposées en face l'une de l'autre.

5. Collier de serrage de tuyaux selon l'une des revendications 3 ou 4, caractérisé en ce que l'extrémité (20) soudée de la bande dépasse de la selle (14) avec une partie libre (42"), à la manière d'une languette, vers le côté opposé à l'élément d'appui.

6. Collier de serrage de tuyaux selon l'une des revendications 1 à 5, caractérisé en ce que la selle (14) et/ou l'élément d'appui (10) comportent des pattes de pliage (14') qui sont disposées par paires, en image de miroir, pliées l'une vers l'autre, avec formation d'un joint (32, 34) orienté de préférence dans la direction longitudinale de la bande et réunies par paires, à leurs joints (32, 34), par des soudures à laser (36, 38).

7. Collier de serrage de tuyaux selon la revendication 6, caractérisé en ce que les pattes de pliage (14') contiguës de la selle (14) et/ou de l'élément d'appui (10) sont à chaque fois séparées l'une de l'autre par un dégagement (50) qui forme une sortie de bande de l'ouverture de tunnel (24).

8. Collier de serrage de tuyaux selon l'une des revendications 1 à 7, caractérisé en ce que les soudures à laser (36, 38) de l'élément d'appui (10) et de la selle (14) sont décalées en échelons l'une par rapport à l'autre en laissant libre une sortie de bande.

9. Collier de serrage de tuyaux selon l'une des revendications 1 à 8, caractérisé en ce que la selle (14) présente du côté de l'élément d'appui un prolongement en forme de languette, de préférence courbée dans le sens de la bande.

10. Collier de serrage de tuyaux selon l'une des revendications 1 ou 4, caractérisé en ce que les soudures à laser sont réalisées sous la forme de soudures linéaires.

11. Collier de serrage de tuyaux selon la revendication 3, caractérisé en ce que la soudure à laser recouvrement est réalisée sous la forme d'une soudure par points ou d'une soudure de système constituée par des joints par points transversaux et longitudinaux.
